# EUROPEAN PATENT APPLICATION

(11) **EP 3 587 906 A1**
(43) Date of publication of application: **01.01.2020**
(21) Application number: 18382486.1
(22) Date of filing: 29.06.2018
(51) Int. Cl.: F21S 41/39, F21S 43/37

(54) **BALL SOCKET CONNECTION, OPTICAL ASSEMBLY AND AUTOMOTIVE LUMINOUS DEVICE**

(71) Applicant: VALEO ILUMINACION, 23600 Martos (ES)
(72) Inventor: FERNANDEZ, Ricardo, 23600 MARTOS (ES); GUERRERO, Alexis, 23600 MARTOS (ES)
(74) Representative: Valeo Vision

(57) **Abstract**

The invention is referred to a ball socket connection (1) for an optical assembly of an automotive luminous device (20). This ball socket connection (1) comprises a first portion (11) intended to be coupled to the optical assembly in a first direction (d1) and a second portion (12) intended to be coupled to an aiming system of a housing (21) of the automotive luminous device (20) in a second direction (d2), wherein the first direction (d1) is different from the second direction (d2). The invention also provides an optical assembly and an automotive luminous device.

## Description

### TECHNICAL FIELD

This invention is related to the field of the manufacturing of automotive luminous devices, and more specifically to the connection of optical elements to the luminous device housing.

### STATE OF THE ART

Current luminous devices are incorporating more luminous functionalities, and are becoming smaller. This leads to situations where tolerances need to be reduced.

One of these manufacturing tolerances is related to the LED and the optical element used to project the light emitted by the LED. This optical element is usually a reflector. The best way of reducing these tolerances is to choose the Z-axis for the reflector main drafting direction.

For achieving a better focalization of the LEDs, a positioning system referenced in the Z-axis is needed. However, current reflectors need to be drafted in X-axis, since they are going to be coupled to the housing in this X-axis. Further, when using thermoset reflectors, sliders should be avoided for drafting process, making it impossible to have a Z-axis reference for the printed circuit board and a X-axis directed hole for ball sockets

As a consequence, a solution for improving the tolerances involved in this problem but taking into account the X-axis connection between the reflector and the housing is needed.

### DESCRIPTION OF THE INVENTION

The invention provides a solution for this problem by means of a ball socket connection according to claim 1, an optical assembly according to claim 9 and an automotive luminous device according to claim 13. Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides a ball socket connection for an optical assembly of an automotive luminous device, the ball socket connection comprising a first portion intended to be coupled to the optical assembly in a first direction and a second portion intended to be coupled to an aiming system of a housing of the automotive luminous device in a second direction, wherein the first direction is different from the second direction.

This ball socket connection is suitable for achieving a connection between an optical assembly and an aiming system of a luminous device housing, without the optical assembly being necessarily drafted according to an axis parallel to the connection direction between the optical assembly and the housing.

The optical assembly comprises an optical element, but may also comprise several mechanical elements and supports, which may be in charge of different functions concerning the adjustment of the optical assembly.

In some particular embodiments, the first direction and the second direction form between 80° and 100°.

In this case, the drafing direction may be substantially perpendicular with respect to the connection direction. This case is particularly advantageous for some lighting functionalities.

In some particular embodiments, the second portion comprises a ball socket configured to be coupled to a ball stud comprised in the aiming system of the housing of the automotive luminous device. In other particular embodiments, the second portion comprises a cylindrical housing configured to be coupled to a cylindrical protrusion in the aiming system of the housing of the automotive luminous device.

These different connections are advantageous for some lighting functionalities, where regulation, which may be carried out by the aiming system, is also mandatory once the luminous device has been installed in the housing.

In some particular embodiments, the first portion comprises a snap-fit connection configured to be coupled to the optical assembly. In other particular embodiments, the first portion comprises a straight protrusion configured to be coupled to the optical assembly by pressure-fit. In other particular embodiments, the first portion is configured to be coupled to the optical assembly by means of a screw, a rivet, a nut or a bolt.

These different connections are advantageous depending on the particular optical element and the lighting functionality performed by the luminous device.

In some particular embodiments, the ball socket connection comprising more than one piece. These embodiments are advantageous when there is a complex geometry and dividing it in two or more parts makes the manufacturing process or the installation process easier. The ball socket connection may comprise brackets or any other additional piece which may help the connection to be achieved in a more convenient manner.

In a further inventive aspect, the invention provides an optical assembly configured to be coupled to a ball socket connection according to any of the preceding claims, the optical assembly comprising an optical element being configured to receive light beams and project them in a projecting direction, wherein the optical assembly comprises a parting line from the drafting process and at least a portion of the parting line is substantially parallel to the projecting direction.

This optical element may be more finely designed, since the relation between a light source and the optical element is more precisely set when the optical element is drafted in a direction (Z-axis) which is perpendicular to the projecting direction (X-axis). The parting line is an indicator of the drafting direction, since this parting line is formed when two mould halves join, and at least part of this joint line is usually perpendicular to the drafting direction. Hence, at least part of the parting line is perpendicular to the drafting direction and therefore parallel to the projecting direction.

The optical assembly comprising the optical element configured to receive light beams and project them in a projecting direction, and being configured to be coupled to a ball socket connection according to the first inventive aspect, may have alternatively been manufactured according to a drafting direction, and wherein the drafting direction is substantially perpendicular to the projecting direction.

This is a different way of expressing the condition of the optical assembly.

In some particular embodiments, the optical assembly does not comprise any physical mark which reveals the use of sliders in the manufacturing process.

When the manufacturing process comprises a drafting step where the drafting direction is not the one of the optical assembly of the present invention, the use of sliders is compulsory, and this use leaves physical marks on such an optical assembly.

In some particular embodiments, the optical assembly comprises a secondary housing intended to receive the first portion of the ball socket connection of the first inventive aspect, the secondary housing not being in direct contact with the optical element.

Since the ball socket connection has different portions which allow being connected to the optical assembly and to the aiming system in different directions, there is no need that the housing which receives the ball socket connection is in contact with the optical element of the optical assembly. This is advantageous, since it prevents the accuracy of the optical element being affected by an additional element which could cause deformations in the manufacturing process.

In a further inventive aspect, the invention provides an automotive luminous device comprising
a housing with an aiming system;
an optical assembly according to the previous inventive aspect;
a ball socket connection according to the first inventive aspect;
wherein the ball socket connection is configured to be coupled to the optical assembly and to the aiming system, so as to attach the optical assembly to the housing.

This automotive luminous device has an optical assembly which has been drafted in the optimum direction, and is connected to the housing in the traditional way, due to the particular and advantageous features of the ball socket connection.

In some particular embodiments, the optical element is a reflector. The reflector is a typical optical element and its design is affected by the drafting direction. A drafting direction according to the Z-axis is particularly advantageous, since it allows a finer design and reduced tolerances. Further, a connection direction according to the X-axis, perpendicular to the Z-axis, does not require any particular change in the shape of the housing.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a ball socket connection according to the invention.
Figure 2 shows a reflector according to the invention.
Figure 3 shows a lighting device according to the invention, comprising the ball socket connection of Figure 1 and the reflector of Figure 2.
Figure 4 shows a lighting device according to the invention installed in an automotive vehicle.

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

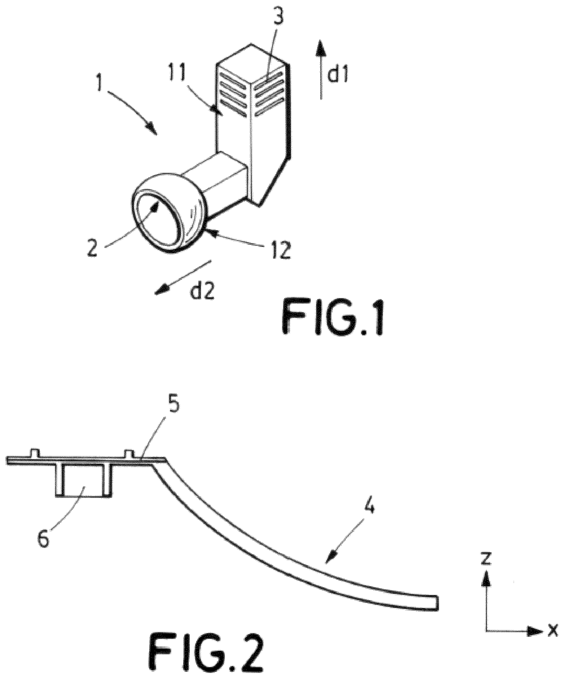

Figure 1 shows a ball socket connection 1 according to the invention. This ball socket connection 1 comprises
a first portion 11 intended to be coupled to a reflector in a first direction d1; and
a second portion 12 intended to be coupled to an aiming system of a housing of an automotive lighting device in a second direction d2.

The first direction d1 is substantially perpendicular to the second direction d2, and in any case, they form between 80° and 100°.

This ball socket is configured to couple an optical assembly comprising a reflector to the aiming system of a housing of an automotive lighting device. Its particular shape makes it able to couple to an optical system which is drafted in the first direction d1, which is perpendicular to the second direction d2, which is the direction of connection between the optical assembly and the housing.

In this case, the second portion 12 comprises a ball socket 2 configured to be coupled to a ball stud, which will be comprised in the aiming system of the housing of the automotive lighting device. However, in different embodiments, this connection is not necessarily between a ball socked and a ball stud, and may be, e. g., between a cylindrical housing and a cylindrical protrusion.

Further, in this case, the first portion 11 comprises a straight protrusion 3, which is intended to be coupled to a corresponding cavity located in the optical assembly by pressure-fit. In other embodiments not shown in this figure, this connection between the ball socket connection and the optical assembly may be made using a snap-fit connection or even screws, rivets, nuts or bolts.

Figure 2 shows an optical assembly according to the invention. This optical assembly comprises a reflector 4, which is configured to receive light coming from a LED and reflect it according to the X-axis, which is the projecting direction. However, due to design requirements, the optical assembly has been drafted in a Z-axis direction, which is perpendicular to the X-axis direction. This optical assembly comprises a parting line 5 which extends parallel to the X-axis direction, which is the consequence of the reflector being drafted in the Z-axis direction (a parting line is usually perpendicular to the drafting direction). As a consequence, the parting line 5 is parallel to the projecting direction.

Further, this optical assembly is configured to receive the ball socket connection of Figure 1, by means of a secondary housing 6 which is adapted to receive the straight protrusion 3 of the ball socket connection 1.

In a usual embodiment of the manufacturing process, the ball socket connection 1 is first coupled to the optical assembly and then form an assembly which may be easily installed in the aiming system of a lighting device housing, in the traditional connection direction, following the X-axis. The distinctive feature of this reflector is that, although has been drafted in a Z-axis direction, may be connected to the housing in a traditional X-axis direction.

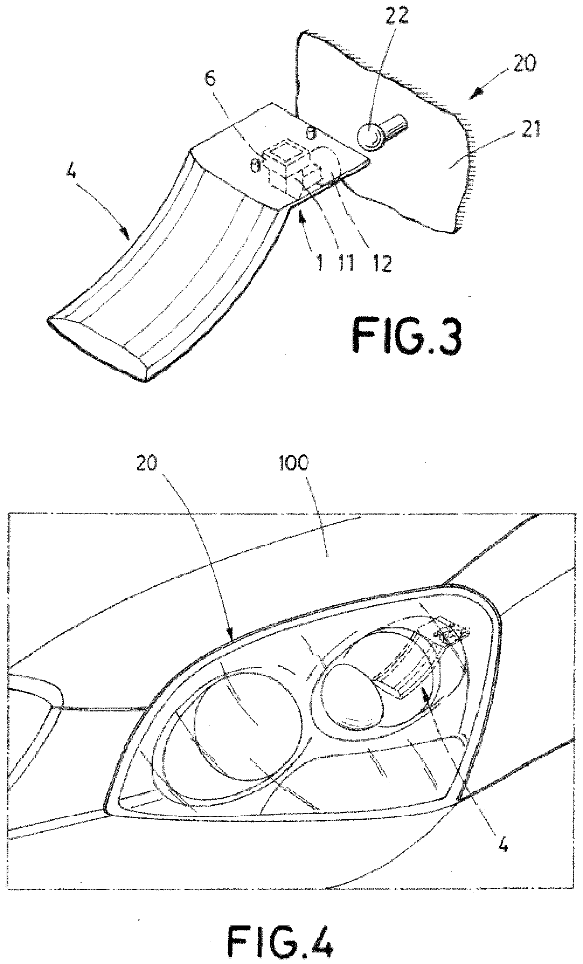

Figure 3 shows an automotive lighting device 20 according to the invention. This automotive lighting device 20 comprises
a housing 21 comprising a ball stud 22;
the optical assembly of Figure 2; and
the ball socket connection 1 of Figure 1.

The ball socket connection 1 has been first coupled to the optical assembly by means of the straight protrusion 3 inserted in the secondary housing 6 by press fitting. Then, this assembly is coupled to the ball stud 22 of the housing 21 in the X-axis direction.

Figure 4 shows a lighting device 20 according to the invention which has been installed in an automotive vehicle 100.

This lighting device 20 takes advantage of the particular design of the reflector 4, which has been designed according to an advantageous drafting direction. As a consequence, this lighting device 20 achieves a better performance.

## Claims

1. Ball socket connection (1) for an optical assembly of an automotive luminous device (20), the ball socket connection (1) comprising a first portion (11) intended to be coupled to the optical assembly in a first direction (d1) and a second portion (12) intended to be coupled to an aiming system of a housing (21) of the automotive luminous device (20) in a second direction (d2), wherein the first direction (d1) is different from the second direction (d2).

2. Ball socket connection (1) according to claim 1, wherein the first direction (d1) and the second direction (d2) form between 80° and 100°.

3. Ball socket connection (1) according to any of the preceding claims, wherein the second portion (12) comprises a ball socket (2) configured to be coupled to a ball stud (22) comprised in the aiming system of the housing (21) of the automotive luminous device (20).

4. Ball socket connection (1) according to any of claims 1 or 2, wherein the second portion (12) comprises a cylindrical housing configured to be coupled to a cylindrical protrusion in the aiming system of the housing of the automotive luminous device (20).

5. Ball socket connection (1) according to any of the preceding claims, wherein the first portion (11) comprises a snap-fit connection configured to be coupled to the optical assembly.

6. Ball socket connection (1) according to any of claims 1 to 4, wherein the first portion (11) comprises a straight protrusion (3) configured to be coupled to the optical assembly by pressure fit.

7. Ball socket connection (1) according to any of claims 1 to 4, wherein the first portion (11) is configured to be coupled to the optical assembly by means of a screw, a rivet, a nut or a bolt.

8. Ball socket connection (1) according to any of the preceding claims, the ball socket connection (1) comprising more than one piece.

9. Optical assembly configured to be coupled to a ball socket connection (1) according to any of the preceding claims, the optical assembly comprising an optical element (4) being configured to receive light beams and project them in a projecting direction, wherein the optical assembly comprises a parting line from the drafting process and at least a portion of the parting line (5) is substantially parallel to the projecting direction.

10. Optical assembly comprising an optical element (4) configured to receive light beams and project them in a projecting direction, the optical assembly being configured to be coupled to a ball socket connection (1) according to any of claims 1 to 8, the optical assembly being manufactured according to a drafting direction, and wherein the drafting direction is substantially perpendicular to the projecting direction.

11. Optical assembly according to any of claims 9 or 10, which does not comprise any physical mark which reveals the use of sliders in the manufacturing process.

12. Optical assembly according to any of claims 9 to 11, comprising a secondary housing (6) intended to receive the first portion of the ball socket connection according to any of claims 1 to 8, the secondary housing not being in direct contact with the optical element (4).

13. Automotive luminous device (20) comprising
a housing (21) with an aiming system (22);
an optical assembly (4) according to claim any of claims 9 to 12;
a ball socket connection (1) according to any of claims 1 to 8;
wherein the ball socket connection (1) is configured to be coupled to the optical assembly (4) and to the aiming system (22), so as to attach the optical assembly (4) to the housing (21).

14. Automotive luminous device (20) according to claim 10, wherein the optical element is a reflector (4).
